# FASCICULE DE BREVET EUROPEEN

(11) **EP 1 998 883 B1**
(45) Date de publication et mention de la délivrance du brevet: **04.08.2010**
(21) Numéro de dépôt: 07731157.9
(22) Date de dépôt: 16.03.2007
(51) Int. Cl.: B01J 8/02

(54) **REACTEUR ECHANGEUR A COMBUSTION INTERNE POUR REACTION ENDOTHERMIQUE EN LIT FIXE**
AUSTAUSCHERREAKTOR MIT INTERNER VERBRENNUNG FÜR ENDOTHERME REAKTION IM FESTBETT
INTERNAL COMBUSTION EXCHANGER REACTOR FOR ENDOTHERMIC REACTION IN FIXED BED

(30) Priorité: 17.03.2006 FR 0602432; 14.11.2006 FR 0609923
(43) Date de publication de la demande: 10.12.2008
(73) Titulaire: IFP, 92852 Rueil-Malmaison Cédex (FR)
(72) Inventeur: BERTHOLIN, Stéphane, F-69110 St Foy les Lyon-France (FR); GIROUDIERE, Fabrice, F-69530 Orlienas (FR); FISCHER, Béatrice, F-69005 Lyon (FR); COLIN, Jérôme, F-69002 LYON (FR)
(86) Numéro de dépôt international: PCT/FR2007/000466
(87) Numéro de publication internationale: WO 2007/118950

(56) Documents cités:
- EP-A- 1 505 036
- EP-A2- 1 516 663
- GB-A- 1 039 756
- JP-A- 58 124 532
- JP-A- 59 016 536
- US-A- 3 909 299
- US-A- 4 504 447

## Description

La présente invention concerne le domaine des réacteurs destinés à effectuer des réactions de vapo-reformage à partir de charge hydrocarbonées en vue de produire un mélange d'hydrogène et de monoxyde de carbone appelé gaz de synthèse.

Plus précisément, la présente invention porte sur la technologie des réacteurs mettant en oeuvre des moyens optimisés de contrôle des échanges thermiques pour les réactions endothermiques et plus particulièrement pour les réactions de vapo-réformage.

Le vapo-reformage est le procédé majeur de production d'hydrogène ou de gaz de synthèse constitué d'hydrogène et de monoxyde de carbone à partir d'une charge hydrocarbonée et de vapeur d'eau.

La charge hydrocarbonée est composée d'hydrocarbures légers tels que le gaz naturel, les gaz de raffinerie, le GPL et les naphtas légers et plus particulièrement le méthane, en mélange avec de la vapeur d'eau. Dans le cas du méthane, la réaction de vapo-réformage mise en oeuvre est la suivante :

CH₄ + H₂O ↔ CO + 3H₂

La réaction de vapo-réformage est une réaction chimique fortement endothermique (ΔH°₂₉₈ = 206 kJ/mol) qui nécessite donc un apport de chaleur extérieur important.

### État de la technique

Les réacteurs mettant en oeuvre les réactions catalytiques endothermiques pour la production d'hydrogène à partir de charge hydrocarbonée sont bien connus dans l'art antérieur.

Le document US 4 692 306 décrit un réacteur échangeur de vapo-reformage comportant avec un moyen de chauffage situé au centre d'une zone catalytique annulaire de dimension réduite. Il est clair que ce réacteur est destiné à des unités de petite taille. Cette technologie de réacteur échangeur est donc exclue pour des applications industrielles de grande capacité.

Le document US 5 565 009 décrit un réacteur échangeur de vapo-reformage en lit fixe chauffé par des doubles tubes enfouis dans le lit dans lesquels on réalise une combustion. La charge pénètre au niveau de l'extrémité supérieure du réacteur dans le lit catalytique où la réaction de vapo-réformage a lieu grâce à la chaleur de la combustion transférée par radiation au milieu réactionnel.

Ce réacteur ne permet pas une optimisation des échanges thermiques entre les différents fluides comme le permet la présente invention.

Le document US 3 909 299 décrit un réacteur dans lequel on opère une réaction de vapo réformage, la réaction étant permise par un apport de chaleur fourni par un brûleur alimenté en combustible et en hydrogène et muni de becs permettant le passage du flux d'air chaud généré dans une chambre de combustion qui entoure les compartiments du réacteur contenant le lit catalytique. Le réacteur selon le document US 3 909 299 permet la génération de chaleur dans la chambre de combustion et sa distribution autour des compartiments du réacteur contenant le lit catalytique. Cette configuration ne permet pas une distribution uniforme de la chaleur au sein des zones catalytiques.

Le document EP 1 505 036 décrit un réacteur dans lequel est produit de l'hydrogène. Le réacteur contient un seul brûleur plongé dans une zone catalytique cylindrique, les gaz de combustion étant évacués dans l'espace annulaire 4A-4B. Après réaction dans la zone catalytique cylindrique chauffée par le brûleur, l'effluent gazeux issu de la réaction est collecté et évacué dans un espace annulaire extérieur à la zone catalytique.

Le document EP 1 516 663 décrit un réacteur dans lequel la charge est vaporisée par la chaleur dégagée par la combustion du carburant et de l'air pénétrant dans l'enceinte du réacteur, la zone de combustion étant extérieure au lit catalytique. Les gaz de combustion sont également utilisés pour chauffer le lit catalytique.

Le document US 4 504 447 décrit un réacteur de réformage muni d'un brûleur extérieur à la zone catalytique située à l'intérieur d'un tube de type tube a baïonnette, le brûleur étant placé de manière à ce que les gaz de combustion circulent dans un conduit entourant la zone catalytique. Cette configuration ne permet pas une distribution uniforme de la chaleur au sein de la zone catalytique.

Un objectif de l'invention est de pallier aux inconvénients de l'état de la technique et de fournir une technologie nouvelle de réacteur, et plus particulièrement un réacteur présentant une structure interne particulière dans lequel la chaleur nécessaire à la réaction endothermique est apportée, à l'intérieur du réacteur, par une série d'échange de chaleur radiatif et/ou convectif.

Dans le cadre de la réaction de vaporéformage très fortement endothermique, il est nécessaire de transférer à la charge (un hydrocarbure et de la vapeur d'eau) ainsi qu'à la zone réactionnelle contenant la zone catalytique, l'énergie thermique requise pour ce service.

Il convient donc de disposer de surfaces d'échanges conséquentes en contact avec le catalyseur : la solution usuelle décrite dans l'art antérieur consiste à compartimenter la zone catalytique dans un espace étroit caractérisé par un faible volume catalytique et une surface d'échange thermique importante. Typiquement, on dispose le catalyseur dans une configuration tubulaire (tube simple ou double tube concentrique (dit tube à baïonnette)) ou bien entre des plaques rapprochées, l'espacement caractéristique d'une zone catalytique étant de l'ordre de la dizaine de centimètre.

Dans ces configurations, la capacité de conversion permise dans cet espace est limitée. Il serait d'ailleurs illusoire de vouloir réaliser des réacteurs en changeant l'échelle des concepts unitaires. On ne peut donc augmenter la capacité de ces dispositifs qu'en multipliant le nombre de zones catalytiques identiques mais disjointes que l'on assemble dans une enceinte unique. On notera dans ce cas que ces réacteurs sont le plus souvent des assemblages de réacteurs élémentaires chauffés par l'extérieur.

A l'inverse, nos recherches nous ont permis de trouver une alternative aux différents dispositifs en permettant de maintenir une seule zone catalytique continue c'est-à-dire une zone chargeable et déchargeable en une seule fois.

Le réacteur échangeur selon l'invention présente une seule zone catalytique continue dans laquelle la chaleur est générée et distribuée dans la zone catalytique, de préférence unique par des moyens chauffage et des moyens de collecte de l'effluent, différents et répartis dans ladite zone catalytique.

### Description des modes de réalisation

L'invention concerne un réacteur échangeur (1) comprenant :
- une enceinte (2)
- des moyens de distribution d'une charge à travers une zone catalytique en lit fixe (10),
- des moyens de collecte (6) de l'effluent issu de la zone catalytique (10),
- des moyens de chauffage de la zone catalytique (10),
dans lequel lesdits moyens de collecte (6) comportent des conduits traversant la zone catalytique (10) de part en part, lesdits conduits étant répartis dans la zone catalytique et intercalés entre les moyens de chauffage, et dans lequel les moyens de chauffage de la zone catalytique sont contenus dans des gaines (8) en partie immergées dans la zone catalytique (10), les gaines (8) étant ouvertes à l'une de leurs extrémités et fermées à l'autre, l'extrémité ouverte étant fixée à une plaque tubulaire supérieure (21) délimitant la chambre de collecte (19) située au dessus de la zone catalytique (10), lesdits moyens de chauffage comportant au moins un zone de combustion (13) située a proximité de la zone catalytique, des moyens d'alimentation de ladite zone de combustion (13) en mélange gazeux oxydant (15) et en combustible gazeux (17), et des moyens d'évacuation de l'effluent gazeux issu de la combustion (14).

Au moins deux moyens de collecte (6) peuvent être répartis dans une seule et unique zone catalytique en lit fixe et intercalés entre au moins deux moyens de chauffage.

Les moyens de distribution de la charge peuvent comporter une plaque tubulaire inférieure perforée dont les perforations sont prolongées par des éléments tubulaires appelés tubes de charge.

Les moyens de distribution de la charge à travers la zone catalytique (10) en lit fixe peuvent être constitués de plaques perforées horizontales tronquées (24) et d'une plaque perforée supérieure non tronquée (26), les perforations permettant le passage des moyens de collecte (6) de l'effluent.

Les plaques perforées horizontales tronquées (24) et la plaque perforée supérieure non tronquée (26) peuvent être disposées dans la zone inférieure inerte (10c) pour former un système de chicanes.

La plaque tubulaire inférieure perforée peut être soutenue par un lit de billes inertes.
La zone catalytique peut comporter au moins une zone inerte inférieure située sur ladite plaque tubulaire inférieure.
La zone inerte inférieure peut avoir une épaisseur correspondant sensiblement à la longueur desdits tubes de charge.

Les conduits collectant l'effluent issu de la zone catalytique peuvent être situés entre une chambre de collecte située en aval de la zone catalytique et des moyens d'évacuation dudit effluent.

Les conduits collectant l'effluent issu de la zone catalytique peuvent traverser ladite plaque tubulaire inférieure dans l'espace interne des tubes de charge.

Les conduits collectant l'effluent issu de la zone catalytique peuvent comporter sur leur paroi externe des ailettes pour augmenter la surface au contact de la zone catalytique.

Les gaines peuvent comporter sur leur paroi externe des ailettes pour augmenter la surface au contact de la zone catalytique.

Les moyens de chauffage peuvent être constitués par les pièces co-axiales suivantes :
- un tube d'alimentation en mélange gazeux oxydant, débouchant dans la gaine sensiblement au niveau supérieur de la zone catalytique,
- un moyen de distribution du combustible dit tube de combustible relié à l'une de ses extrémités au moyen d'alimentation en combustible et situé à l'intérieur du tube d'alimentation en mélange gazeux oxydant et débouchant sensiblement au même niveau.

La zone de combustion peut être située dans la gaine (8) au niveau de l'extrémité supérieure de la zone catalytique (10).

Dans ce cas, les moyens de chauffage peuvent comprendre un tube de re-circulation de l'effluent gazeux issu de la combustion, ouvert à ses deux extrémités, et situé dans la gaine en aval de la zone de combustion.

Les moyens de chauffage peuvent également être constitués par les pièces co-axiales suivantes :
- un tube d'alimentation en mélange gazeux oxydant, débouchant dans la gaine sensiblement au niveau du fond desdites gaines,
- un moyen de distribution du combustible dit tube de combustible relié à l'une de ses extrémités au moyen d'alimentation en combustible, situé à l'intérieur du tube d'alimentation en mélange gazeux oxydant et se prolongeant sensiblement jusqu'au fond des gaines, ledit tube de combustible comprenant au moins une portion de paroi poreuse.

Les perforations réalisées dans la paroi des tubes de combustible (112) peuvent définir plusieurs zones de combustion (113) réparties le long de la paroi des tubes de combustible (112) immergée dans la zone catalytique (110).

Les tubes d'alimentation en mélange gazeux oxydant peuvent être remplis sur toute leur hauteur et jusqu'à l'extrémité supérieure de la zone catalytique, d'un catalyseur d'oxydation.

Les moyens de chauffage peuvent également être constitués par :
- un tube d'alimentation en mélange gazeux oxydant, débouchant dans la gaine sensiblement au niveau du fond desdites gaines,
- un catalyseur d'oxydation à l'intérieur et sur au moins une portion de la hauteur des tubes d'alimentation en mélange gazeux oxydant, au droit de la zone catalytique et disposé en aval du tube de distribution du combustible.

Un fluide de refroidissement peut être injecté dans la chambre de collecte de l'effluent issu de la zone catalytique.

La plaque tubulaire perforée supérieure peut être constituée en double paroi de façon à permettre la circulation d'un fluide de refroidissement dans l'espace interne.

La zone de combustion (13) peut être située au sein de la zone catalytique (10).

Le réacteur échangeur peut être utilisé pour la réaction de vaporéformage.

### Description sommaire des figures

La figure 1 montre une vue en coupe selon un axe BB' du réacteur échangeur illustré sur la figure 1.
La figure 2 montre une vue longitudinale en coupe selon l'axe AA' du réacteur échangeur selon l'invention dans sa version de base.
La figure 3 montre une vue longitudinale en coupe du réacteur échangeur selon l'invention dans une variante où l'injection du combustible est répartie sur toute la hauteur des gaines.
La figure 4 montre une vue longitudinale en coupe du réacteur échangeur selon l'invention dans une variante où la combustion dans les gaines est réalisée sur un catalyseur d'oxydation.
Les figures 5a et 5b montrent une vue longitudinale en coupe de la partie supérieure du réacteur échangeur dans des variantes où un système de refroidissement est mis en oeuvre.
La figure 6 montre une vue longitudinale en coupe selon l'axe AA' du réacteur échangeur selon l'invention dans une variante où la plaque tubulaire inférieure perforée est soutenue par un lit de billes inertes.
La figure 7 illustre sur une vue longitudinale en coupe selon l'axe AA' du réacteur échangeur selon l'invention, une variante des moyens de distribution de la charge à travers la zone catalytique en lit fixe.
La figure 8 montre une vue en coupe selon un axe BB' des moyens de distribution de la charge à travers la zone catalytique en lit fixe du réacteur échangeur illustré sur la figure 7.

### Description des figures

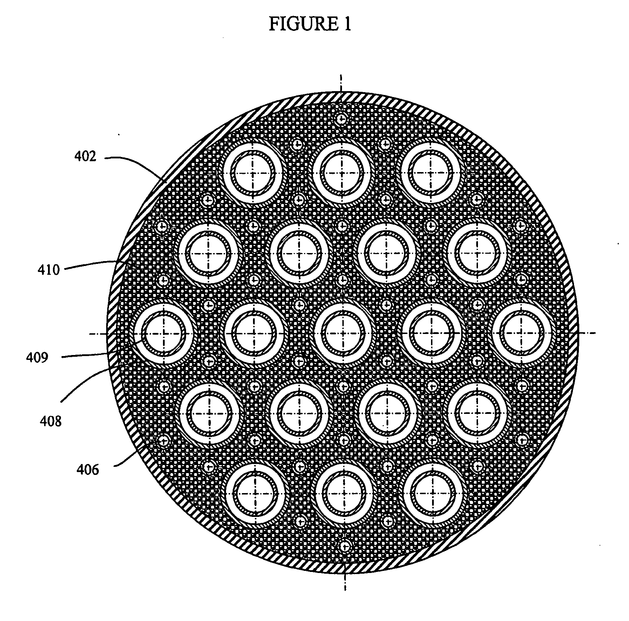

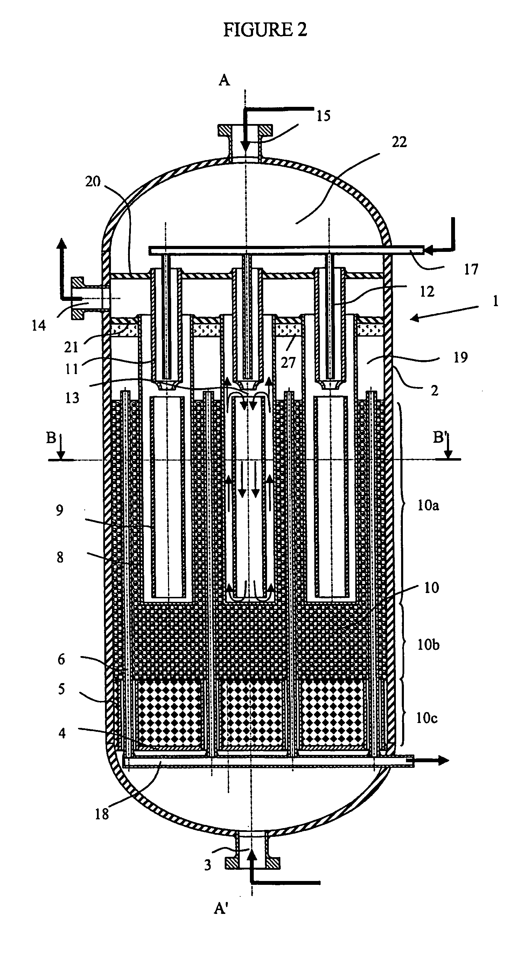

La figure 1 montre une vue en coupe du réacteur selon l'invention illustrée sur la figure 2 selon un axe BB'. Les moyens de collecte (406) du gaz de synthèse produit sont répartis dans la zone catalytique (410) et sont intercalés entre les moyens de chauffage de manière à ce que les échanges de chaleur entre la charge et le gaz de synthèse produits soient homogènes. Cette configuration du réacteur selon l'invention permet donc une distribution uniforme de la chaleur dans la zone catalytique. Les gaines (408) contiennent les tubes de re-circulation (409) de l'effluent gazeux issu de la combustion.

Le réacteur échangeur (1) est schématisé sur la figure 2. Il comprend une enceinte cylindrique (2) suivant l'axe AA' entièrement recouverte sur sa surface intérieure par un matériau réfractaire isolant (non représenté sur la figure).
Le réacteur échangeur (1) comprend dans son enceinte (2), une zone catalytique (10) reposant en partie inférieure du réacteur échangeur sur une plaque tubulaire (4) perforée inférieure, fixée de manière étanche à l'enceinte du réacteur.

Cette zone catalytique (10) se décompose en trois couches disposées les unes sur les autres.
- Une zone catalytique supérieure (10a)
- Une zone catalytique médiane (10b)
- Une zone inerte inférieure (10c)

Cette enceinte comprend :
- un moyen d'alimentation (3) en charge hydrocarbonée,
- une plaque tubulaire perforée inférieure (4) permettant le passage de la charge hydrocarbonée à travers la zone catalytique, dans des éléments tubulaires situés dans le prolongement des perforations et raccordés à la surface de ladite plaque. Les éléments tubulaires, appelés tube de charge (5), sont de longueur sensiblement égale à l'épaisseur de la zone inerte inférieure. La plaque tubulaire perforée inférieure (4) et les éléments tubulaires constituent les moyens de distribution de la charge à travers la zone catalytique,
- une chambre de collecte (19) de l'effluent issu de la zone catalytique situé au dessus de la zone catalytique, ladite chambre de collecte (19) étant obturée par une plaque tubulaire supérieure (21) fixée de manière étanche à l'enceinte du réacteur,
- des moyens de collecte (6) de l'effluent issu de la zone catalytique, traversant de part en part la zone catalytique (10), lesdits moyen de collecte (6) étant constitués de conduits mettant en communication la chambre de collecte (19) avec un moyen d'évacuation (18) de l'effluent issu de la zone catalytique,
- La plaque tubulaire supérieure (21) obturant la chambre de collecte (19) de l'effluent issu de la zone catalytique présente des orifices dans lesquels sont fixées de manière étanche des gaines (8), lesdites gaines (8) plongeant dans la zone catalytique (10) et plus particulièrement dans la zone catalytique active supérieure (10a). La gaine (8) est ouverte à l'une de ses extrémités et fermée à l'autre, l'extrémité ouverte étant fixée à la plaque tubulaire (21) et débouchant dans l'espace situé entre la plaque tubulaire (21) et la plaque tubulaire (20), et l'extrémité fermée étant plongée dans la zone catalytique active. L'espace situé entre la plaque tubulaire (21) et la plaque tubulaire (20) permet la collecte de l'effluent gazeux issu de la combustion et l'évacuation de cet effluent par le moyen d'évacuation (14).
- A l'intérieur de ces gaines (8), sont disposés des moyens de chauffage de la zone catalytique selon plusieurs variantes, lesdits moyens de chauffage étant alimentés par un moyen d'alimentation (15) en mélange gazeux oxydant, et un moyen d'alimentation (17) en combustible gazeux,

Selon un premier mode de réalisation illustré sur la figure 2, les moyens de chauffage de la zone catalytique (10) sont constitués par les pièces co-axiales suivantes :
- un tube d'alimentation (11) en mélange gazeux oxydant, ouvert à ses deux extrémités, une extrémité ouverte étant fixée à la plaque tubulaire (20) et débouchant dans l'espace collecteur du mélange gazeux oxydant (22), et l'autre extrémité ouverte étant plongée dans la gaine (8) jusqu'au niveau de l'extrémité supérieure de la zone catalytique (10),

- un moyen de distribution du combustible constitué par un tube dit tube de combustible (12), relié à l'une de ses extrémités au moyen d'alimentation en combustible (17) et situé à l'intérieur du tube d'alimentation (11) en mélange gazeux oxydant et sensiblement de même dimension. L'extrémité inférieure du tube d'alimentation (11) en mélange gazeux oxydant et l'extrémité inférieure du tube de combustible (12) débouchent sur une zone de combustion (13), c'est-à-dire sur une zone où la réaction de combustion se produit. La zone de combustion (13) se situe dans la gaine (8) au niveau de l'extrémité supérieure de la zone catalytique (10),
- un tube de re-circulation (9) de l'effluent gazeux issu de la combustion, ouvert à ses deux extrémités, et situé dans la gaine (8) en aval de la zone de combustion (13).

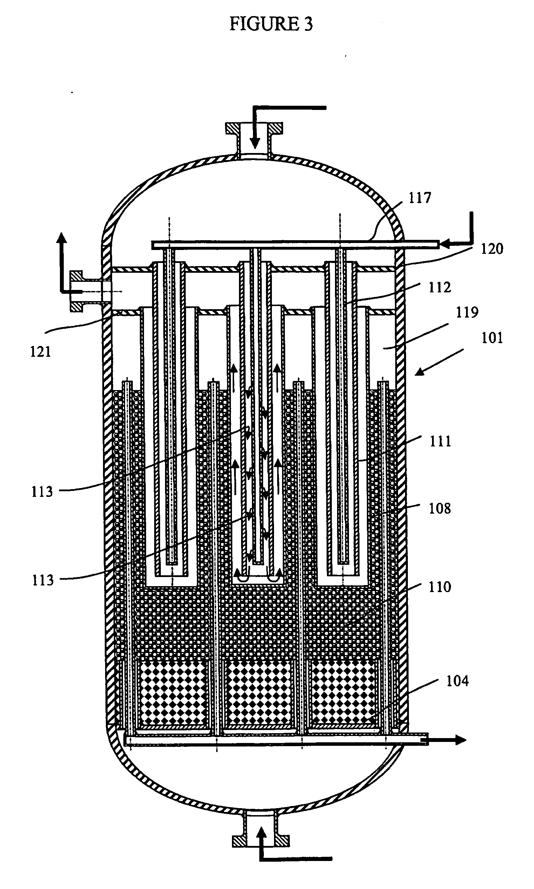

La figure 3 illustre une autre variante des moyens de chauffage dans laquelle les tubes d'alimentation (111) en mélange gazeux oxydant, contenant les tubes de combustible (112) de même dimension et fermés à leur extrémité inférieure, plongent jusqu'au fond des gaines (108).

Les tubes de combustible (112) présentent une paroi étanche dans leur partie supérieure non immergée dans la zone catalytique (110), et une paroi poreuse dans leur partie inférieure immergée dans la zone catalytique (110). La porosité est obtenue soit par des trous percés dans la paroi des tubes de combustible (112), soit en utilisant directement un matériau poreux de type fritté, mousse métallique ou mousse céramique pour réaliser les tubes. Les perforations réalisées dans la paroi des tubes de combustible (112) définissent plusieurs zones de combustion (113) réparties le long de la paroi des tubes de combustible (112) immergée dans la zone catalytique (110).
La multiplicité des zones de combustion permet d'obtenir localement une plus grande dilution et par conséquent une température de combustion moins importante.

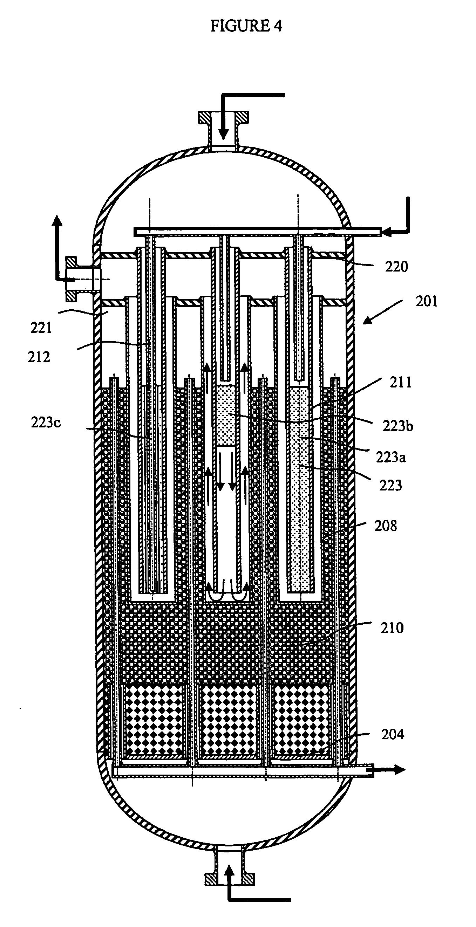

La figure 4 illustre une variante des moyens de chauffage identique à la variante précédente, à la différence que l'on réalise dans ces moyens de chauffage une combustion catalytique.

Selon un mode de réalisation particulier illustré en 223c) de la figure 4, on réalise une combustion catalytique sans flamme en disposant un catalyseur d'oxydation à l'intérieur et sur toute la hauteur des tubes d'alimentation (211) en mélange gazeux oxydant immergée dans la zone catalytique (210).

Selon le mode de réalisation particulier illustré en 223b), le tube d'alimentation (211) en mélange gazeux oxydant plongent jusqu'au fond de la gaine (208) et contient le tube de combustible (212) qui est raccourci par rapport à la variante illustrée en 223c) et dont l'extrémité inférieure ouverte débouche au niveau de l'extrémité supérieure du lit de catalyseur d'oxydation (223). Selon cette variante, le lit de catalyseur d'oxydation est placé à l'intérieure du tube d'alimentation (211) en mélange gazeux oxydant, au niveau de l'extrémité supérieure de la zone catalytique (210), et en occupe toute la section.

Le mode de réalisation particulier illustré en 223a) est identique au mode de réalisation illustré en 223b), à la différence que le lit de catalyseur d'oxydation (223) est réparti sur toute la hauteur immergée du tube d'alimentation (211) en mélange gazeux oxydant, et en occupe toute la section.

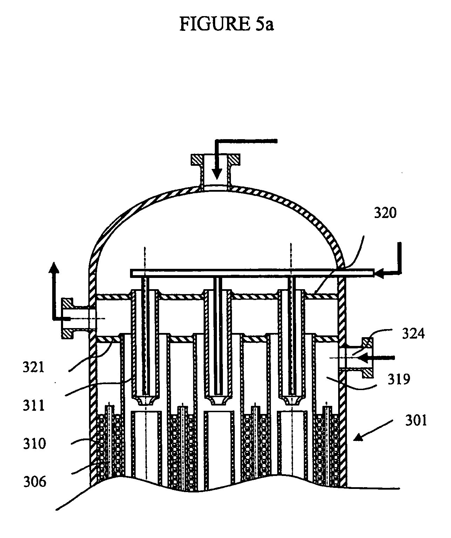

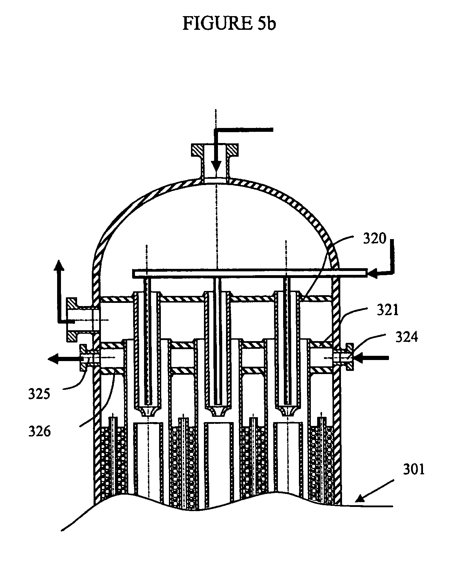

Les figures 5 présentent des mises en oeuvre d'injection d'un fluide de refroidissement dans la partie supérieure du réacteur échangeur (301). L'objectif de cette injection est essentiellement de refroidir la plaque tubulaire (321) obturant la chambre de collecte (319) de l'effluent issu de la zone catalytique, dans la cas où l'échange thermique entre l'effluent gazeux issu de la combustion et le mélange gazeux oxydant le long de la paroi du tube de combustion (311) serait insuffisant pour abaisser la température de l'effluent gazeux issu de la combustion à une température admissible par la plaque tubulaire (321).

La figure 5a met en oeuvre une variante dans laquelle une injection directe du fluide de refroidissement est réalisée sous la plaque tubulaire (321). Le fluide de refroidissement se mélange à l'effluent issu de la zone catalytique (310) et est évacué de l'enceinte du réacteur échangeur par les tubes constituant les moyens de collecte (306) de l'effluent issu de la zone catalytique.

La figure 5b met en oeuvre une autre variante dans laquelle la plaque tubulaire perforée (321) est constituée en double paroi (321) (326) laissant passer les gaines (308). La plaque tubulaire perforée inférieure en double paroi (321) et (326) forment un espace clos comportant un moyen d'injection en fluide de refroidissement (324), et un moyen d'évacuation (325) de ce même fluide après échange de chaleur.

La figure 6 illustre un mode de réalisation particulier du réacteur selon l'invention dans lequel la plaque tubulaire inférieure perforée (4) est soutenue par un lit de billes inertes remplissant l'espace collecteur (23) du mélange de charge hydrocarbonée et de vapeur d'eau. L'espace collecteur (23) est obturé par un distributeur (25) qui a pour fonction de distribuer le mélange de charge hydrocarbonée et de vapeur d'eau de manière homogène à l'intérieur de l'espace collecteur (23) et de maintenir le lit de billes inertes à l'intérieur de cet espace collecteur (23).

La plaque tubulaire inférieure perforée (4) a donc pour fonction de contraindre la charge à circuler dans les tubes de charges (5) autour des moyens de collecte (6) et non pas une fonction de soutien des tubes de charges (5) et de la zone catalytique (10) en lit fixe.

La plaque tubulaire inférieure perforée (4) peut être par exemple calée sur un anneau de support fixé à la paroi interne de l'enceinte, non représenté sur la figure.
La plaque tubulaire inférieure perforée (4) peut également être simplement maintenue en position par les billes inertes remplissant l'espace collecteur (23) et la zone catalytique (10) en lit fixe chargée au dessus.

Les tubes de charges (5) peuvent être calés sur la plaque tubulaire inférieure perforée (4), leur maintien en position perpendiculaire à la plaque tubulaire inférieure perforée (4) étant assuré par la zone catalytique (10) en lit fixe.

Le lit de billes inertes remplissant l'espace collecteur (23) forme une zone (10d) favorisant l'homogénéisation de la distribution de la charge dans l'espace collecteur (23).

Le lit de billes inertes constituant la zone (10d) est constitué par exemple de billes d'alumine.

Le lit de billes inertes remplissant l'espace collecteur (23) forme une zone (10d) est uniquement représenté sur la figure 6 mais peut être également représenté sur les figures 2 à 5.

La figure 7 illustre une variante des moyens de distribution de la charge à travers la zone catalytique (10) en lit fixe.

Dans ce cas, les moyens de distribution de la charge à travers la zone catalytique (10) en lit fixe sont constitués de plaques perforées horizontales tronquées (24) et d'une plaque perforée supérieure non tronquée (26), les perforations permettant le passage des moyens de collecte (6) de l'effluent.
Les plaques perforées horizontales tronquées (24) sont disposées dans la zone inférieure inerte (10c) pour former un système de chicanes et permettre une circulation de la charge en "zig zag" entre les moyens de collectes (6) de l'effluent gazeux.
La plaque perforée supérieure non tronquée (26), dite plaque de distribution, comporte des moyens de distribution homogène du mélange de charge hydrocarbonée et de vapeur d'eau dans la zone catalytique (10) et en premier lieu dans la zone inerte (10c) de manière à permettre la répartition du fluide sur toute la surface de la plaque.
Le système de chicanes permet une circulation de gauche à droite du mélange de charge hydrocarbonée et de vapeur d'eau plus longue.

La figure 8 illustre une vue en coupe selon un axe BB' le système de chicane de la figure 7. Il s'agit donc de plaques perforées horizontales tronquées (24), les perforations permettant le passage des moyens de collecte (406) de l'effluent. Ces plaques perforées horizontales tronquées (424) permettent la circulation de gauche à droite du mélange de charge hydrocarbonée et de vapeur d'eau.

Afin de protéger la plaque tubulaire supérieure (21) des températures élevées de la chambre de collecte (19), il est également possible de recouvrir la surface de ladite plaque tubulaire supérieure (21) en contact avec l'effluent issu de la zone catalytique, d'un écran thermique (27) représenté sur la figure 1. L'écran thermique est réalisé en matériau isolant tel que par exemple en béton réfractaire ou en céramique. Cet écran thermique (27) est uniquement représenté sur la figure 1 mais peut être représenté sur toutes les figures.

Bien que la distribution du combustible soit assurée par un unique moyen d'alimentation en combustible (17), commun à tous les tubes de combustible (12) selon les figures 2 à 5, l'invention n'est pas limitée à ce mode d'alimentation particulier, il est également possible d'alimenter chaque tube de combustible (12) par un moyen d'alimentation indépendant.
Ce mode de réalisation particulier, non représenté sur les figures, permet le contrôle de la combustion dans chaque moyen de chauffage de façon indépendante.

Bien qu'il soit orienté verticalement, dans les variantes décrites ci-dessus, l'invention n'est pas limitée à un mode d'orientation particulier. L'enceinte du réacteur échangeur est de forme cylindrique dans les variantes décrites ci-dessus mais l'invention n'est pas limitée à cette forme de réacteur. L'enceinte du réacteur échangeur peut être de différente section.

Les plaques tubulaires (4), (20) et (21) sont fixées de manière étanche aux parois internes de l'enceinte. Elles sont de préférence soudées à l'enceinte ou boulonnées avec un joint d'étanchéité.

La plaque tubulaire inférieure perforée (4) peut être fixée de manière étanche aux parois internes de l'enceinte et de préférence soudée à l'enceinte ou boulonnée avec un joint d'étanchéité.
Les tubes de charges (5) peuvent être soudés à la plaque tubulaire inférieure perforée (4) dans le prolongement des perforations.
La plaque tubulaire inférieure perforée (4) peut également être calée sur un anneau de support fixé à la paroi interne de l'enceinte.
Les tubes de charges (5) peuvent également être calés sur la plaque tubulaire inférieure perforée (4).
La plaque tubulaire inférieure perforée (4) peut également être simplement maintenue en position par les billes inertes remplissant l'espace collecteur (23) et la zone catalytique (10) en lit fixe chargée au dessus.

Le réacteur échangeur décrit précédemment présente une technologie adaptée à tout type de réaction endothermique. Il est particulièrement adaptée dans le cadre de l'invention à la réaction de vapo-réformage.

### Application du dispositif à la réaction de vapo-réformage

Dans le cas où le réacteur échangeur est utilisé pour réaliser une réaction de vapo-réformage, la charge hydrocarbonée comprend un mélange d'hydrocarbures légers tels que, par exemple, le gaz naturel, les gaz de raffinerie, le GPL, les naphtas légers et les biogaz issus de la fermentation des déchets ou de la biomasse, pris seuls ou en mélange, avec de la vapeur d'eau, de préférence un mélange de méthane et de vapeur d'eau dans le cas où la réaction endothermique est la réaction de "Steam Methane Reforming" selon la terminologie anglo-saxonne ou de Vapo-Réformage du Méthane.

Dans ce cas, la zone catalytique en lit fixe qui remplit au moins partiellement l'enceinte du réacteur-échangeur se décompose en trois zones catalytiques disposées les unes sur les autres :
- une zone inerte inférieure en contact avec la plaque tubulaire composée d'un lit de particules inertes
- une zone catalytique médiane de pré-réformage, composée d'un catalyseur qui peut être identique ou différent de celui utilisé dans la zone catalytique active de vapo-réformage,
- une zone catalytique supérieure de vapo-réformage qui est composée d'un catalyseur classique de vapo-reformage.

Dans le cas où la zone catalytique supérieure de vapo-réformage et la zone catalytique médiane de pré-réformage sont composées du même catalyseur, il s'agit d'un catalyseur classique de vapo-réformage comprenant 8 à 25% en poids d'un élément du groupe VIII, de préférence le nickel, 1 à 4% en poids de potasse supporté sur de l'alumine.

Dans le cas où la zone catalytique supérieure de vapo-réformage et la zone catalytique médiane de pré-réformage sont composées d'un catalyseur différent, le catalyseur utilisé dans la zone catalytique supérieure de vapo-réformage est celui décrit ci-dessus et le catalyseur utilisé dans la zone catalytique médiane de pré-réformage est un catalyseur spécifique de pré-reformage comprenant 1 à 20% en poids d'un élément du groupe VIII, de préférence le nickel, 0,4 à 5% en poids de potassium supporté par de l'alumine ou de l'aluminate de calcium

Les particules inertes constituant la zone catalytique inerte sont généralement constituées de d'alumine sous forme de billes.

En partie haute du réacteur échangeur, le mélange de charge hydrocarbonée et de vapeur d'eau pénètre dans l'enceinte par le moyen d'alimentation (3), traverse la plaque tubulaire inférieure (4) et pénètre dans la zone inerte inférieure en passant dans les tubes de charge (5) traversant ladite zone. Le mélange se réchauffe en circulant dans les tubes de charge disposés autour des moyens de collectes (6) du gaz de synthèse produit, par échange de chaleur avec le gaz de synthèse circulant à l'intérieur des moyens de collectes.
Cette zone inerte inférieure, non chauffée par les moyens de chauffage, constitue une première zone d'échange de chaleur. Elle permet un échange de chaleur convectif entre le flux de charge hydrocarbonée et le flux du gaz de synthèse produit circulant à contre courant.

Le mélange ainsi préchauffé pénètre dans la zone catalytique médiane de pré-réformage, délimitée par l'extrémité supérieure de la zone inerte et l'extrémité fermée de la gaine. Cette zone de pré-réformage est une zone de pré-traitement de la charge hydrocarbonée avant son passage dans la zone de réaction, permettant de convertir au moins partiellement la charge hydrocarbonée en gaz de synthèse. L'énergie nécessaire à cette réaction est apportée par la charge, elle-même préchauffée au niveau de la zone inerte inférieure dans les tubes de charge, mais également par échange de chaleur avec le gaz de synthèse circulant à l'intérieur des tubes de gaz de synthèse, au niveau de la zone catalytique médiane de pré-réformage.
Cette zone de pré-réformage, non chauffée par les moyens de chauffage, constitue une deuxième zone d'échange de chaleur. Cette deuxième zone d'échange de chaleur permet de pré-chauffer le flux de charge hydrocarbonée circulant dans la zone catalytique médiane de pré-réformage et d'apporter l'énergie nécessaire à la réaction de pré-réformage, tout en refroidissant le flux de gaz de synthèse circulant à contre-courant dans les moyens de collecte du gaz de synthèse traversant la zone catalytique.

La mise en oeuvre, dans le cadre de l'invention, d'une réaction de pré-reformage présente un intérêt certain :
- les calories contenues dans le gaz de synthèse produit sont utilisées au mieux car l'échange thermique permet non seulement de préchauffer la charge mais également de la convertir. Cela permet de limiter le chargement du reformeur principal et autorise une température d'attaque du reformeur principal plus importante pour un risque de formation de coke équivalent.
- le pré-réformage permet également de convertir les composants les plus lourds de la charge, ce qui préserve le catalyseur du reformeur principal et donne plus de flexibilité à l'installation quant à la nature de la charge à traiter.

L'effluent produit dans la zone médiane de pré-réformage pénètre ensuite dans la zone catalytique supérieure constituée d'un catalyseur de vapo-reformage et remonte le long de cette zone en produisant du gaz de synthèse. L'énergie nécessaire à cette réaction est apportée principalement par échange de chaleur radiatif et convectif avec le moyen de chauffage, mais également par échange de chaleur convectif avec le gaz de synthèse circulant à l'intérieur des moyens de collecte du gaz de synthèse traversant la zone catalytique.
Cette zone de vapo-réformage constitue donc une troisième zone d'échange de chaleur, située au niveau de la zone catalytique supérieure, c'est-à-dire dans la zone où a lieu la réaction de vapo-réformage qui est définie par l'espace situé entre l'extrémité inférieure fermée de la gaine et l'extrémité supérieure de la zone catalytique. Cette troisième zone permet un échange de chaleur à la fois radiatif et convectif.

Le gaz de synthèse produit dans la zone catalytique de vapo-réformage supérieure sort de la zone catalytique et est collectée dans la chambre de collecte (19) situé au dessus de la zone catalytique, ladite chambre de collecte étant obturée par la plaque tubulaire supérieure (21).

Les moyens de collecte (6) du gaz de synthèse produit sont répartis dans la zone catalytique et sont intercalés entre les moyens de chauffage de manière à ce que les échanges de chaleur entre la charge et le gaz de synthèse produits soient homogènes.

La présence des moyens de collecte (6) du gaz de synthèse produit, traversant de part en part de la zone catalytique, permet donc des échanges de chaleur convectifs sur toute la hauteur de la zone catalytique, entre la charge et le gaz de synthèse produits par la circulation à contre courant de ces deux flux : en sortant de la zone catalytique supérieure de vapo-réformage, le gaz de synthèse produit pénètre dans les moyens de collecte (6) du gaz de synthèse traversant de part en part la zone catalytique et redescend en partie basse du réacteur échangeur en se refroidissant sur toute la longueur de la zone catalytique, par échange de chaleur avec l'effluent circulant dans la zone catalytique supérieure, puis dans la zone catalytique médiane de pré-réformage, puis avec la charge circulant dans les tubes de charge dans la zone inerte inférieure. Le gaz de synthèse produit est ensuite évacué du réacteur échangeur par le moyen d'évacuation (18).
En partie haute du réacteur échangeur, le mélange gazeux oxydant pénètre dans l'enceinte par le moyen d'alimentation (15), traverse la plaque tubulaire (20) et pénètre dans les moyens de chauffage par les tubes d'alimentation (11) en mélange gazeux oxydant.
Le combustible gazeux pénètre également dans l'enceinte par le moyen d'alimentation (17) correspondant, puis dans les tubes de combustible (12) situés à l'intérieur des tubes d'alimentation en mélange gazeux oxydant (11).

Le mélange gazeux oxydant est un gaz contenant entre 0,1 et 21% d'oxygène comprenant de préférence de l'air, un mélange d'oxygène et de dioxyde de carbone ou de manière très préférée, des fumées issues d'une turbine à gaz pour la génération d'électricité. Dans ce cas, le mélange gazeux oxydant est constitué de fumées oxydantes issues d'une turbine.

Le combustible gazeux comprend un hydrocarbure sous forme gazeuse de type gaz naturel ou gaz de raffinerie ou sous forme liquide, de type essence, gasoil ou fioul lourd, préalablement vaporisé avant son entrée dans le réacteur et de manière préférée, de l'hydrogène produit par le réacteur lui-même et utilisé pur après traitement de séparation.

Selon une première variante des moyens de chauffage illustré sur la figure 1, à la sortie des tubes de combustible (12), le combustible gazeux se mélange avec le mélange gazeux oxydant au niveau de la zone de combustion et réagit par une réaction de combustion qui produit des fumées à haute température au niveau de l'extrémité supérieure de la zone catalytique.

Ces fumées pénètrent dans les tubes de re-circulation, sont guidées jusqu'au fond des gaines (8) et remontent dans l'espace annulaire formé entre les tubes de re-circulation (9) et les gaines (8).
Sur toute la hauteur du tube de re-circulation (9), les fumées qui descendent dans le tube de re-circulation chauffent par échange de chaleur les fumées qui remontent dans l'espace annulaire formé entre le tube de re-circulation et la paroi interne de la gaine. Ces dernières chauffent l'effluent en réaction dans la zone catalytique supérieure par échange de chaleur à travers la paroi des gaines (8).

Ces échanges de chaleur à contre-courant ont pour objectif de réduire au maximum le gradient thermique sur la hauteur des gaines. De cette façon, la chaleur transférée par les fumées issues de la combustion à la zone catalytique est relativement homogène sur toute la hauteur des gaines immergée dans la zone catalytique.
En partie haute des tubes de re-circulation (9), une partie des fumées qui remontent dans l'espace annulaire formé entre le tube de re-circulation et la gaine est entraînée par les fumées produites au niveau de la zone de combustion (13) et re-circulent à nouveau dans les tubes de re-circulation. Cette configuration permet de diluer et d'agiter localement les réactifs de la combustion, donc d'abaisser la température de la flamme produite par la combustion, ce qui préserve les matériaux d'une température trop importante et réduit la formation des oxydes d'azote préjudiciables pour l'environnement.

Les fumées chaudes, issues de la combustion, qui ne re-circulent pas dans les tubes de re-circulation, remontent dans l'espace annulaire formé entre les tubes d'alimentation (11) en mélange gazeux oxydant et les gaines (8) et se refroidissent par échange de chaleur avec le mélange gazeux oxydant qui, lui, se réchauffe en descendant dans les tubes d'alimentation (11) en mélange gazeux oxydant.
Cette zone, située entre l'extrémité de la zone catalytique et la plaque tubulaire (20) constitue une quatrième zone d'échange de chaleur. Cette quatrième zone permet un échange de chaleur convectif entre le flux des fumées issues de la combustion, avant leur évacuation de l'enceinte, et le flux du mélange gazeux oxydant qui pénètre dans le moyen de chauffage

Cette quatrième zone d'échange de chaleur est très importante puisqu'elle permet d'abaisser suffisamment la température des fumées issues de la combustion pour pouvoir utiliser une technologie de type plaque tubulaire soudée classique, c'est-à-dire utilisant des alliages métalliques ordinaires pour la réalisation des plaques. Après avoir traversé ladite plaque tubulaire, les fumées issues de la combustion sont évacuées de l'enceinte du réacteur échangeur par le moyen d'évacuation (14).

Selon la figure 2, les moyens de chauffage repartissent l'injection du combustible dans le flux de mélange gazeux oxydant et permettent ainsi d'obtenir une zone de combustion (113) plus étendue. Le combustible gazeux circule dans les tubes de combustible (112) jusqu'à leur partie poreuse, où il traverse la paroi des tubes pour brûler au contact du mélange gazeux oxydant circulant dans le tube d'alimentation (111) en mélange gazeux oxydant. Les fumées issues de la combustion circulent alors jusqu'au fond des gaines (108) puis remontent dans l'espace annulaire formé entre les tubes d'alimentation (111) en mélange gazeux oxydant et les gaines (108), en échangeant de la chaleur avec la zone de réaction et avec les fumées issues de la combustion contenues dans les tubes d'alimentation en mélange gazeux oxydant.
De cette façon, la combustion est répartie sur toute la hauteur poreuse du tube de combustible en fonction de la porosité choisie. Il est donc possible en modulant la porosité de distribuer la chaleur soit de façon homogène sur la hauteur du tube, soit de façon non homogène si l'on souhaite imposer un profil thermique. Par exemple, il est possible d'accentuer la porosité en partie inférieure du tube ce qui permettrait d'augmenter le débit de combustible dans cette zone et par conséquent, d'augmenter la température de combustion. Dans ce cas, la température des fumées de combustion est plus importante dans la partie inférieure de la gaine que dans la partie supérieure.

Selon la figure 3, les moyens de chauffage mettent en oeuvre une combustion sans flamme à l'intérieur des tubes d'alimentation (211) en mélange gazeux oxydant, à l'aide d'un lit de catalyseur d'oxydation (223) réparti dans lesdits tubes d'alimentation. Le mélange gazeux oxydant pénètre dans le réacteur échangeur, traverse la plaque tubulaire (220) et circule dans les tubes d'alimentation (211) en mélange gazeux oxydant jusqu'au catalyseur d'oxydation (223). Le mélange gazeux oxydant et le combustible se mélangent à proximité du catalyseur d'oxydation et réagissent sur celui-ci par combustion sans flamme pour produire des fumées chaudes. Ces fumées de combustion sortent des tubes d'alimentation en mélange gazeux oxydant en partie basse et remontent dans les gaines (208) en apportant de l'énergie à la zone catalytique par échange de chaleur avant leur évacuation de l'enceinte.

Une combustion sans flamme utilisant un catalyseur d'oxydation présente l'avantage d'éviter la présence de points chauds qui pourraient endommager les matériaux, et d'améliorer la combustion en réduisant la présence d'imbrûlés dans les fumées.

Le catalyseur d'oxydation comprend de 1 à 10% d'un élément noble du Groupe VIII de la classification périodique, de préférence le palladium et/ou le platine sur un support de type alumine ou zircone. Le catalyseur d'oxydation est mis en oeuvre sous la forme d'un dépôt de surface ou "washcoat" selon la terminologie anglo-saxonne, déposé sur un monolithe ou une mousse réalisé à partir d'un matériau métallique de type alliage réfractaire haute température ou céramique comme par exemple de la cordiérite.

Selon un mode de réalisation particulier illustré par les figures 4a et 4b, il est possible d'injecter un fluide de refroidissement directement sous la plaque tubulaire supérieure (321), dans la chambre de collecte de l'effluent issu de la zone catalytique, (selon la figure 4a) afin de refroidir ladite plaque, de manière à permettre l'utilisation d'une technologie de type plaque tubulaire soudée classique, c'est-à-dire utilisant des alliages métalliques ordinaires pour la réalisation des plaques. Le fluide de refroidissement se mélange au gaz de synthèse produit et est évacué de l'enceinte du réacteur avec lui par les moyens de collecte du gaz de synthèse communiquant avec le moyen d'évacuation.

Il est aussi possible d'injecter un fluide de refroidissement dans l'espace situé entre la double paroi de la plaque tubulaire supérieure (321)(326), ladite plaque étant perforée et permettant le passage des gaines selon la figure 4b.

Ladite plaque perforée constituée en paroi double (321) (326) est fixée de façon étanche à l'enceinte du réacteur échangeur. La traversée des gaines dans la plaque est également réalisée par un montage étanche tel que par exemple, par soudure, ou par assemblage mécanique. L'assemblage mécanique peut être un joint d'étanchéité comprimé par presse-étoupe ou un soufflet métallique, le principe de cette liaison étant d'autoriser à chaud un déplacement des gaines au travers de la plaque perforée tout en maintenant l'étanchéité.

L'injection du fluide de refroidissement permet de refroidir ladite plaque tubulaire supérieure constituée en paroi double (321) (326), et les gaines par échange de chaleur, le fluide de refroidissement est ensuite évacué de l'enceinte du réacteur échangeur par le moyen d'évacuation également située entre la double paroi de la plaque tubulaire supérieure.

Le fluide de refroidissement peut être de nature très diverse, sous forme de vapeur, et de préférence de la vapeur d'eau. La charge peut également être utilisé comme fluide de refroidissement, elle sera ainsi préchauffée avant d'être introduite dans le réacteur échangeur. Le mélange gazeux oxydant peut également être utilisé ainsi que tout autre fluide caloporteur.

La mise en oeuvre de l'injection du fluide de refroidissement en un seul point du réacteur échangeur n'est pas exclusive. L'introduction peut être réalisée par de multiples points d'injection positionnés sur la circonférence de l'enceinte du réacteur échangeur afin de couvrir toute la surface de la plaque tubulaire.

Dans un autre mode d'utilisation du réacteur échangeur, la stoechiométrie du mélange combustible/mélange de gaz oxydant peut être modifiée afin de ne réaliser qu'une oxydation partielle du combustible et produire de cette façon du gaz de synthèse. Par exemple, si le combustible est du méthane, l'insuffisance d'oxygène conduit à la réaction suivante :

CH₄ + ½ O₂ → CO + 2 H₂

Cette réaction, fortement exothermique, se produit à une température élevée comprise entre 1200 et 1500°C, la chaleur produite peut être utilisée pour la réaction de vapo-reformage comme dans le cas de base précédent.

Ce mode d'utilisation permet d'accroître le rendement du réacteur échangeur puisque dans ce cas, les fumées de combustion sont composées de gaz de synthèse.

Selon une variante de cet autre mode d'utilisation du réacteur échangeur, un catalyseur d'oxydation partielle peut être utilisé en modifiant la stoechiométrie du mélange combustible / mélange de gaz oxydant afin de produire du gaz de synthèse par oxydation partielle catalytique. Cette réaction est fortement exothermique et la chaleur produite peut être utilisée pour la réaction de vapo-réformage comme dans le cas de base précédent.

Dans ce cas, le catalyseur d'oxydation comprend 5 et 30%, d'un élément noble du Groupe VIII de la classification périodique, de préférence le Palladium, Platine ou préférentiellement le Rhodium, déposé sur un support céramique de type alumine, cordiérite ou zircone et de préférence un support en alumine alpha poreuse.

### Conditions opératoires.

La réaction de vapo-réformage opère avantageusement à une température élevée qui varie entre l'entrée et la sortie de la zone catalytique :
- en entrée de la zone catalytique, la température est comprise entre 500 et 750°C
- en sortie de la zone catalytique, la température est comprise entre 750 et 950°C et de manière préférée, comprise entre 850 et 900°C.

La réaction de vapo-réformage opère avantageusement à une pression comprise entre 0,5 et 5 MPa, de manière préférée entre 1 et 4 MPa et de manière très préférée, entre 2 et 2,5 MPa.

En entrée de réacteur échangeur, la charge hydrocarbonée est composée d'un mélange d'hydrocarbure avec de la vapeur d'eau dans des proportions telles que le ratio molaire vapeur d'eau/carbone est avantageusement compris entre 2 et 5 et de manière préférée, compris entre 2,3 et 2,7.

En entrée de réacteur échangeur, la température de la charge hydrocarbonée est avantageusement comprise entre 350 et 750°C et de manière préférée, comprise entre 550 et 650°C, et la charge hydrocarbonée pénètre dans l'enceinte du réacteur échangeur à une pression sensiblement identique à la pression de réaction ci-dessus.

Après la réaction de vapo-réformage, le gaz de synthèse produit sort de la zone catalytique et pénètre dans les moyens de collecte du gaz de synthèse à une température avantageusement comprise entre 750 et 950°C, et de manière préférée, comprise entre 850 et 900°C.

En sortie de l'enceinte du réacteur échangeur, la température du gaz de synthèse produit est avantageusement comprise entre 300 et 500°C, et de manière préférée entre 350 et 450°C, et le gaz de synthèse produit sort de l'enceinte du réacteur échangeur à une pression sensiblement identique à la pression de réaction ci-dessus.

En entrée de réacteur échangeur, la température du mélange gazeux oxydant est avantageusement comprise entre 300 et 800°C et de manière préférée, comprise entre 650 et 750°C dans le cas où le mélange gazeux oxydant est constitué de fumées prélevées en sortie de turbines et de manière préférée, comprise entre 350 et 450°C dans le cas où le mélange gazeux oxydant est constitué de fumées prélevées en sortie de compresseurs.
Le mélange gazeux oxydant pénètre dans l'enceinte du réacteur échangeur à une pression avantageusement comprise entre 0,05 et 4 MPa et de manière préférée, comprise entre 0,3 et 0,5 MPa.

A l'issue de la combustion, la température du mélange gazeux issu de la combustion est avantageusement compris entre 900 et 1500°C, et de manière préférée, entre 900 et 1000°C.
En sortie de l'enceinte du réacteur échangeur et après refroidissement par échange thermique avec le mélange gazeux oxydant, la température du mélange gazeux issu de la combustion est abaissé à une température comprise entre 700 et 900°C et de manière préférée, entre 700 et 750°C.

De manière avantageuse, le combustible est introduit dans l'enceinte du réacteur échangeur à une température comprise entre la température ambiante et 400°C et de manière préférée, entre la température ambiante et 150°C, et à une pression comprise entre 0,05 et 4 MPa et de manière préférée, comprise entre 0,3 et 0,5.
De manière avantageuse, le fluide de refroidissement est introduit à l'intérieur de l'enceinte du réacteur échangeur à une température comprise entre 100 et 400°C, et de manière préférée, entre 250 et 350°C.

## Revendications

1. Réacteur échangeur (1) comprenant :
- une enceinte (2)
- des moyens de distribution d'une charge à travers une zone catalytique en lit fixe (10),
- des moyens de collecte (6) de l'effluent issu de la zone catalytique (10),
- des moyens de chauffage de la zone catalytique (10),
dans lequel lesdits moyens de collecte (6) comportent des conduits traversant la zone catalytique (10) de part en part, lesdits conduits étant répartis dans la zone catalytique et intercalés entre les moyens de chauffage, et dans lequel les moyens de chauffage de la zone catalytique sont contenus dans des gaines (8) en partie immergées dans la zone catalytique (10), les gaines (8) étant ouvertes à l'une de leurs extrémités et fermées à l'autre, l'extrémité ouverte étant fixée à une plaque tubulaire supérieure (21) délimitant la chambre de collecte (19) située au dessus de la zone catalytique (10), lesdits moyens de chauffage comportant au moins un zone de combustion (13) située à proximité de la zone catalytique, des moyens d'alimentation de ladite zone de combustion (13) en mélange gazeux oxydant (15) et en combustible gazeux (17), et des moyens d'évacuation de l'effluent gazeux issu de la combustion (14).

2. Réacteur échangeur (1) selon la revendication 1, dans lequel dans lequel au moins deux moyens de collecte (6) sont répartis dans une seule et unique zone catalytique en lit fixe et intercalés entre au moins deux moyens de chauffage.

3. Réacteur échangeur (1) selon l'une des revendications 1 ou 2, dans lequel les moyens de distribution de la charge comportent une plaque tubulaire (4) inférieure perforée dont les perforations sont prolongées par des éléments tubulaires appelés tubes de charge (5).

4. Réacteur échangeur (1) selon l'une des revendications 1 à 3, dans lequel les moyens de distribution de la charge à travers la zone catalytique (10) en lit fixe sont constitués de plaques perforées horizontales tronquées (24) et d'une plaque perforée supérieure non tronquée (26), les perforations permettant le passage des moyens de collecte (6) de l'effluent.

5. Réacteur échangeur (1) selon la revendication 4, dans lequel les plaques perforées horizontales tronquées (24) et la plaque perforée supérieure non tronquée (26) sont disposées dans la zone inférieure inerte (10c) pour former des chicanes.

6. Réacteur échangeur (1) selon l'une des revendications 1 à 5 dans lequel la plaque tubulaire inférieure perforée (4) peut être soutenue par un lit de billes inertes.

7. Réacteur échangeur (1) selon l'une des revendications 1 à 6, dans lequel la zone catalytique (10) comporte au moins une zone inerte inférieure (10c) située sur ladite plaque tubulaire inférieure (4).

8. Réacteur échangeur (1) selon l'une des revendications 1 à 7, dans lequel la zone inerte inférieure (10c) a une épaisseur correspondant sensiblement à la longueur desdits tubes de charge (5).

9. Réacteur échangeur (1) selon l'une des revendications précédentes, dans lequel les conduits (6) collectant l'effluent issu de la zone catalytique (10) sont situés entre une chambre de collecte (19) située en aval de la zone catalytique (10) et des moyens d'évacuation (18) dudit effluent.

10. Réacteur échangeur (1) selon l'une des revendications précédentes, dans lequel les conduits (6) collectant l'effluent issu de la zone catalytique (10) traversent ladite plaque tubulaire inférieure (4) dans l'espace interne des tubes de charge (5).

11. Réacteur échangeur (1) selon l'une des revendications précédentes, dans lequel les conduits (6) collectant l'effluent issu de la zone catalytique (10) comportent sur leur paroi externe des ailettes pour augmenter la surface au contact de la zone catalytique (10).

12. Réacteur échangeur (1) selon l'une des revendications précédentes, dans lequel les gaines (8) comportent sur leur paroi externe des ailettes pour augmenter la surface au contact de la zone catalytique (10).

13. Réacteur échangeur (1) selon l'une des revendications précédentes, dans lequel les moyens de chauffage sont constitués par les pièces co-axiales suivantes :
- un tube d'alimentation (11) en mélange gazeux oxydant, débouchant dans la gaine (8) sensiblement au niveau supérieur de la zone catalytique (10),
- un moyen de distribution du combustible dit tube de combustible (12), relié à l'une de ses extrémités au moyen d'alimentation en combustible (17) et situé à l'intérieur du tube d'alimentation (11) en mélange gazeux oxydant et débouchant sensiblement au même niveau.

14. Réacteur échangeur (1) selon la revendication 13, dans lequel la zone de combustion se situe dans la gaine (8) au niveau de l'extrémité supérieure de la zone catalytique (10).

15. Réacteur échangeur (1) selon la revendication 13, dans lequel les moyens de chauffage comprennent un tube de re-circulation (9) de l'effluent gazeux issu de la combustion, ouvert à ses deux extrémités, et situé dans la gaine (8) en aval de la zone de combustion (13).

16. Réacteur échangeur (101) selon l'une des revendications 1 à 12, dans lequel les moyens de chauffage sont constitués par les pièces co-axiales suivantes :
- un tube d'alimentation (111) en mélange gazeux oxydant, débouchant dans la gaine (108) sensiblement au niveau du fond desdites gaines,
- un moyen de distribution du combustible dit tube de combustible (112) relié à l'une de ses extrémités au moyen d'alimentation en combustible (117), situé à l'intérieur du tube d'alimentation (111) en mélange gazeux oxydant et se prolongeant sensiblement jusqu'au fond des gaines (108), ledit tube de combustible (112) comprenant au moins une portion de paroi poreuse.

17. Réacteur échangeur (101) selon la revendication 16 dans lequel les perforations réalisées dans la paroi des tubes de combustible (112) définissent plusieurs zones de combustion (113) réparties le long de la paroi des tubes de combustible (112) immergée dans la zone catalytique (110).

18. Réacteur échangeur (201) selon la revendication 16, dans lequel les tubes d'alimentation (211) en mélange gazeux oxydant sont remplis sur toute leur hauteur et jusqu'à l'extrémité supérieure de la zone catalytique, d'un catalyseur d'oxydation (223).

19. Réacteur échangeur (201) selon l'une des revendications 1 à 12, dans lequel les moyens de chauffage sont constitués par :
- un tube d'alimentation (211) en mélange gazeux oxydant, débouchant dans la gaine (208) sensiblement au niveau du fond desdites gaines,
- un catalyseur d'oxydation (223) à l'intérieur et sur au moins une portion de la hauteur des tubes d'alimentation (211) en mélange gazeux oxydant, au droit de la zone catalytique (210) et disposé en aval du tube de distribution du combustible (212).

20. Réacteur échangeur (301) selon l'une des revendications précédentes, dans lequel un fluide de refroidissement est injecté dans la chambre de collecte (319) de l'effluent issu de la zone catalytique (310).

21. Réacteur échangeur (301) selon l'une des revendications 1 à 20, dans lequel la plaque tubulaire perforée supérieure (321) est constituée en double paroi (321) (326) de façon à permettre la circulation d'un fluide de refroidissement dans l'espace interne.

22. Réacteur échangeur (301) selon l'une des revendications 1 à 21, dans lequel la zone de combustion (13) située au sein de la zone catalytique (10).

23. Utilisation du réacteur échangeur selon l'une des revendications 1 à 22 pour la réaction de vaporéformage.

## Claims

1. An exchanger-reactor (1) comprising:
• a vessel (2);
• means for distributing a feed through a fixed bed catalytic zone (10);
• means (6) for collecting effluent derived from the catalytic zone (10);
• means for heating the catalytic zone (10);
in which said collection means (6) comprise conduits passing right through the catalytic zone (10), said conduits being distributed in the catalytic zone and interposed between the heating means, and in which the heating means of the catalytic zone are contained in sheaths (8) which are partially immersed in the catalytic zone (10), the sheaths (8) being open at one of their ends and closed at the other, the open end being fixed to an upper tube plate (21) defining the collection chamber (19) which is located above the catalytic zone (10), said heating means comprising at least one combustion zone (13) located close to the catalytic zone, means for supplying said combustion zone (13) with an oxidizing gas mixture (15) and with a gaseous fuel (17), and means for evacuating the gaseous effluent deriving from the combustion (14).

2. An exchanger-reactor (1) according to claim 1, in which at least two collection means (6) are distributed in a single unique fixed bed catalytic zone and interposed between at least two heating means.

3. An exchanger-reactor (1) according to claim 1 or claim 2, in which the means for distributing the feed comprise a perforated lower tube plate (4) the perforations of which are extended by tubular elements termed feed tubes (5).

4. An exchanger-reactor (1) according to one of claims 1 to 3, in which the means for distributing feed through the fixed bed catalytic zone (10) are constituted by truncated horizontal perforated plates (24) and a non-truncated upper perforated plate (26), the perforations allowing passage of the effluent collection means (6).

5. An exchanger-reactor (1) according to claim 4, in which the truncated horizontal perforated plates (24) and the non-truncated upper perforated plate (26) are disposed in an inert lower zone (10c) to form baffles.

6. An exchanger-reactor (1) according to one of claims 1 to 5, in which the perforated lower tube plate (4) is supported by a bed of inert beads.

7. An exchanger-reactor (1) according to one of claims 1 to 6, in which the catalytic zone (10) comprises at least one lower inert zone (10c) located on said lower tube plate (4).

8. An exchanger-reactor (1) according to one of claims 1 to 7, in which the thickness of the lower inert zone (10c) substantially corresponds to the length of said feed tubes (5).

9. An exchanger-reactor (1) according to one of the preceding claims, in which the conduits (6) for collecting effluent derived from the catalytic zone (10) are located between a collection chamber (19) located downstream of the catalytic zone (10) and means (18) for evacuating said effluent.

10. An exchanger-reactor (1) according to one of the preceding claims, in which the conduits (6) collecting effluent deriving from the catalytic zone (10) traverse said lower tube plate (4) in the internal space of the feed tubes (5).

11. An exchanger-reactor (1) according to one of the preceding claims, in which the conduits (6) collecting effluent from the catalytic zone (10) comprise ribs on their outer wall to increase the surface area in contact with the catalytic zone (10).

12. An exchanger-reactor (1) according to one of the preceding claims, in which the sheaths (8) comprise ribs on their outer wall to increase the surface area in contact with the catalytic zone (10).

13. An exchanger-reactor (1) according to one of the preceding claims, in which the heating means are constituted by the following co-axial parts:
• a tube (11) for supplying oxidizing gas mixture, opening into the sheath (8) substantially at the upper level of the catalytic zone (10);
• a means for distributing fuel, termed a fuel tube (12), connected at one of its ends to the means for supplying fuel (17) and located inside the tube (11) for supplying oxidizing gas mixture and opening substantially at the same level.

14. An exchanger-reactor (1) according to claim 13, in which the combustion zone is located in the sheath (8) at the upper end of the catalytic zone (10).

15. An exchanger-reactor (1) according to claim 13, in which the heating means comprise a tube (9) for re-circulating gaseous effluent deriving from the combustion zone, open at both of its ends, and located in the sheath (8) downstream of the combustion zone (13).

16. An exchanger-reactor (101) according to one of claims 1 to 12, in which the heating means are constituted by the following co-axial parts:
• a tube (111) for supplying oxidizing gas mixture opening into the sheath (108) substantially at the bottom of said sheaths;
• a means for distributing fuel, termed a fuel tube (112), connected at one of its ends to the means (117) for supplying fuel, located inside the tube (111) for supplying the oxidizing gas mixture and extending substantially to the bottom of the sheaths (108), said fuel tube (112) comprising at least one porous wall portion.

17. An exchanger-reactor (101) according to claim 16, in which the perforations produced in the wall of the fuel tubes (112) define a plurality of combustion zones (113) distributed along the wall of the fuel tubes (112) immersed in the catalytic zone (110).

18. An exchanger-reactor (201) according to claim 16, in which the tubes (211) for supplying the oxidizing gas mixture are filled to their full height and up to the upper end of the catalytic zone with an oxidation catalyst (223).

19. An exchanger-reactor (201) according to one of claims 1 to 12, in which the heating means are constituted by:
• a tube (211) for supplying oxidizing gas mixture opening into the sheath (208) substantially at the bottom of said sheaths;
• an oxidation catalyst (223) inside and over at least a portion of the height of the tubes (211) for supplying oxidizing gas mixture at right angles to the catalytic zone (210) and disposed downstream of the fuel distribution tube (212).

20. An exchanger-reactor (301) according to one of the preceding claims, in which a cooling fluid is injected into the chamber (319) for collecting effluent deriving from the catalytic zone (310).

21. An exchanger-reactor (301) according to one of claims 1 to 20, in which the upper perforated tube plate (321) is constituted by a double wall (321), (326) to allow a cooling fluid to move in the internal space.

22. An exchanger-reactor (301) according to one of claims 1 to 21, in which the combustion zone (13) is located inside the catalytic zone (10).

23. Use of the exchanger-reactor according to one of claims 1 to 22 in a steam reforming reaction.

## Patentansprüche

1. Wärmetauscher-Reaktor (1), umfassend:
- ein Gehäuse (2),
- Mittel zum Verteilen eines Eintrags durch eine katalytische Festbettzone (10)
- Mittel zur Sammeln (6) des Austrags aus der katalytischen Zone (10),
- Mittel zum Heizen der katalytischen Zone (10),
wobei diese Sammelmittel (6) Leitungen umfassen, die die katalytische Zone (10) durchqueren, diese Leitungen in der katalytischen Zone verteilt sind und zwischen den Heizmitteln liegen, und wobei die Heizmittel der katalytischen Zone in Hüllen (8) enthalten sind, die zum Teil in die katalytische Zone (10) eingetaucht sind, diese Hüllen (8) an einem ihrer Enden geschlossen und am anderen offen sind, das offene Ende an einem oberen Rohrboden (21) befestigt ist, der die Sammelkammer (19) begrenzt, die oberhalb der katalytischen Zone (10) liegt, wobei diese Heizmittel mindestens umfassen eine Verbrennungszone (13), die in der Nähe der katalytischen Zone liegt, Mittel, um diese Verbrennungszone (13) mit einem oxidierenden Gasgemisch (15) und mit gasförmigen Brennstoff (17) zu versorgen, und Mittel, um das gasförmige Abprodukt der Verbrennung (14) abzuleiten.

2. Wärmetauscher-Reaktor (1) nach Anspruch 1, wobei mindestens zwei Sammelmittel (6) in einer einzigen katalytischen Festbettzone verteilt sind und zwischen mindestens zwei Heizmitteln liegen.

3. Wärmetauscher-Reaktor (1) nach einem der Ansprüche 1 oder 2, wobei die Mittel zum Verteilen des Eintrags einen perforierten unteren Rohrboden (4) umfassen, dessen Perforationen durch Rohrteile, Eintragsrohre (5) genannt, verlängert werden.

4. Wärmetauscher-Reaktor (1) nach einem der Ansprüche 1 bis 3, wobei die Mittel zum Verteilen des Eintrags durch die katalytische Festbettzone (10) aus perforierten, horizontalen gestutzten Platten (24) und aus einer perforierten oberen, nicht gestutzten Platte (26) bestehen, wobei die Perforationen den Durchgang der Mittel zum Sammeln (6) des Austrags erlauben.

5. Wärmetauscher-Reaktor (1) nach Anspruch 4, wobei die perforierten, horizontalen gestutzten Platten (24) und die perforierte obere, nicht gestutzte Platte (26) in der unteren inerten Zone (10c) angeordnet sind, um Umlenkplatten zu formen.

6. Wärmetauscher-Reaktor (1) nach einem der Ansprüche 1 bis 5, wobei der perforierte untere Rohrboden (4) von einem Bett aus inerten Kugeln getragen werden kann.

7. Wärmetauscher-Reaktor (1) nach einem der Ansprüche 1 bis 6, wobei die katalytische Zone (10) mindestens eine untere inerte Zone (10c) aufweist, die auf dem unteren Rohrboden (4) liegt.

8. Wärmetauscher-Reaktor (1) nach einem der Ansprüche 1 bis 7, wobei die untere inerte Zone (10c) eine Dicke hat, die im Wesentlichen der Länge der Eintragsrohre (5) entspricht.

9. Wärmetauscher-Reaktor (1) nach einem der vorherigen Ansprüche, wobei die Leitungen (6), die den Austrag aus der katalytischen Zone (10) sammeln, zwischen der Sammelkammer (19), die hinter der katalytischen Zone (10) liegt, und den Mitteln zum Ableiten (18) dieses Austrags liegen.

10. Wärmetauscher-Reaktor (1) nach einem der vorherigen Ansprüche, wobei die Leitungen (6), die den Austrag aus der katalytischen Zone (10) sammeln, den unteren Rohrboden (4) im Innenraum der Eintragsrohre (5) durchqueren.

11. Wärmetauscher-Reaktor (1) nach einem der vorherigen Ansprüche, wobei die Leitungen (6), die den Austrag aus der katalytischen Zone (10) sammeln, auf ihrer Außenwand Rippen aufweisen, um die Kontaktfläche der katalytischen Zone (10) zu vergrößern.

12. Wärmetauscher-Reaktor (1) nach einem der vorherigen Ansprüche, wobei die Hüllen (8) auf ihrer Außenwand Rippen aufweisen, um die Kontaktfläche der katalytischen Zone (10) zu vergrößern.

13. Wärmetauscher-Reaktor (1) nach einem der vorherigen Ansprüche, wobei die Heizmittel aus den folgenden koaxialen Teilen aufgebaut sind:
- einem Speiserohr (11) für das oxidierende Gasgemisch, das im Wesentlichen auf der Höhe der Oberseite der katalytischen Zone (10) in die Hülle (8) einmündet.
- einem Brennstoffverteilungsmittel, Brennstoffrohr (12) genannt, das an einem seiner Enden mit dem Brennstoffversorgungsmittel (17) verbunden ist und im Inneren des Speiserohrs (11) für das oxidierende Gasgemisch liegt und im Wesentlichen auf der gleichen Höhe einmündet.

14. Wärmetauscher-Reaktor (1) nach Anspruch 13, wobei die Verbrennungszone in der Hülle (8) auf der Höhe des oberen Endes der katalytischen Zone (10) liegt.

15. Wärmetauscher-Reaktor (1) nach Anspruch 13, wobei die Heizmittel ein Rückführungsrohr (9) für das gasförmige Abprodukt aus der Verbrennung umfasst, das an seinen beiden Enden offen ist und in der Hülle (8) hinter der Verbrennungszone (13) liegt.

16. Wärmetauscher-Reaktor (101) nach einem der Ansprüche 1 bis 12, wobei die
die Heizmittel aus den folgenden koaxialen Teilen aufgebaut sind:
- einem Speiserohr (111) für das oxidierende Gasgemisch, das im Wesentlichen auf der Höhe des Bodens dieser Hüllen in die Hülle (108) einmündet.
- einem Brennstoffverteilungsmittel, Brennstoffrohr (112) genannt, das an einem seiner Enden mit dem Brennstoffversorgungsmittel (117) verbunden ist, im Inneren des Speiserohrs (111) für das oxidierende Gasgemisch liegt und sich im Wesentlichen bis zum Boden der Hüllen (108) erstreckt, wobei dieses Brennstoffrohr (112) mindestens einen porösen Wandabschnitt aufweist.

17. Wärmetauscher-Reaktor (101) nach Anspruch 16, wobei die Perforationen, die in der Wand der Brennstoffrohre (112) hergestellt sind, mehrere Verbrennungszonen (113) definieren, die entlang der Wand der Brennstoffrohre (112) verteilt sind, die in die katalytische Zone (110) eingetaucht ist.

18. Wärmetauscher-Reaktor (201) nach Anspruch 16, wobei die Speiserohre (211) für das oxidierende Gasgemisch auf ihrer gesamten Höhe und bis zum oberen Ende der katalytischen Zone mit einem Oxidationskatalysator (233) gefüllt sind.

19. Wärmetauscher-Reaktor (201) nach einem der Ansprüche 1 bis 12, wobei die
die Heizmittel bestehen aus:
- einem Speiserohr (211) für das oxidierende Gasgemisch, das im Wesentlichen auf der Höhe des Bodens dieser Hüllen in die Hülle (208) einmündet.
- einem Oxidationskatalysator (223) im Inneren und mindestens auf einem Teil der Höhe der Speiserohre (211) für das oxidierende Gasgemisch, neben der katalytischen Zone (210) und hinter dem Brennstoffverteilungsrohr (212) angeordnet.

20. Wärmetauscher-Reaktor (301) nach einem der vorherigen Ansprüche, wobei ein Kühlfluid in die Sammelkammer (319) des aus der katalytischen Zone (310) Austrags eingespritzt wird.

21. Wärmetauscher-Reaktor (301) nach einem der Ansprüche 1 bis 20, wobei der perforierte obere Rohrboden (321) aus einer Doppelwand (321) (326) derart aufgebaut ist, dass der Umlauf eines Kühlfluids im Innenraum zugelassen wird.

22. Wärmetauscher-Reaktor (301) nach einem der Ansprüche 1 bis 21, wobei die Verbrennungszone (13) im Inneren der katalytischen Zone (10) liegt.

23. Verwendung des Wärmetauscher-Reaktors nach einem der Ansprüche 1 bis 22 für die Dampfreformierungsreaktion.
